# EUROPEAN PATENT SPECIFICATION

(11) **EP 3 279 587 B1**
(45) Date of publication and mention of the grant of the patent: **24.04.2019**
(21) Application number: 17184961.5
(22) Date of filing: 04.08.2017
(51) Int. Cl.: B08B 1/04, B08B 1/00, F25B 15/06

(54) **ABSORPTION-TYPE HEAT PUMP APPARATUS**
ABSORPTIONSWÄRMEPUMPENVORRICHTUNG
APPAREIL DE POMPE À CHALEUR DE TYPE À ABSORPTION

(30) Priority: 04.08.2016 JP 2016153631
(43) Date of publication of application: 07.02.2018
(73) Proprietor: AISIN SEIKI KABUSHIKI KAISHA, Kariya-shi, Aichi-ken, 448-8650 (JP)
(72) Inventor: TSUBOUCHI, Osamu, Kariya-shi, Aichi-ken, 448-8650 (JP)
(74) Representative: Intès, Didier Gérard André

(56) References cited:
- CN-A- 101 033 897
- JP-A- 2013 019 614
- US-A- 4 487 027

## Description

### TECHNICAL FIELD

This disclosure relates to an absorption-type heat pump apparatus.

### BACKGROUND DISCUSSION

An absorption-type heat pump apparatus is known in the related art (e.g. JP 2013-019614 A (Reference 1)).

Reference 1 discloses an absorption-type heat pump apparatus that is provided with an evaporator, an absorber, and a regenerator. The absorption-type heat pump apparatus of Reference 1 is configured to dilute an absorption liquid in the absorber by introducing a refrigerant into the absorber when operation is stopped in order to prevent the absorption liquid, which has been concentrated in the regenerator and sent to the absorber during operation, from being crystallized and solidified in the absorber when operation stops.

In the absorption-type heat pump apparatus described in Reference 1, since the refrigerant is introduced into the absorber when the operation is stopped to dilute the absorption liquid in the absorber in order to prevent the absorption liquid from being crystallized and solidified in the absorber when the operation is stopped, energy accumulated by the concentration of the absorption liquid is discharged when the operation is stopped. Therefore, there is a demand for an absorption-type heat pump apparatus, which is capable of effectively utilizing energy while suppressing the crystallization and solidification of the absorption liquid in the absorber. US 4 487 027 discloses another example of an absorption heat pump apparatus according to the preamble of claim 1.

Thus, a need exists for an absorption-type heat pump apparatus which is not susceptible to the drawback mentioned above and which is capable of effectively utilizing energy while suppressing crystallization and solidification of absorption liquid in an absorber.

### SUMMARY

An absorption-type heat pump apparatus according to the invention is defined in claim 1.

In the absorption-type heat pump apparatus according to the aspect of this disclosure, as described above, the regenerator is provided with the storage section in which the absorption liquid is stored, the heat exchanger, the application unit that applies the absorption liquid, stored in the storage section, to the surface of the heat exchanger, and the peeling unit that peels off the absorption liquid, which has been applied to and solidified on the surface of the heat exchanger, from the surface of the heat exchanger. Thereby, since the absorption liquid may be concentrated and solidified in the regenerator when operation stops, the concentrated absorption liquid is collected in the regenerator so that the concentrated absorption liquid is not supplied to the absorber. Thereby, since it is possible to suppress the concentration of the absorption liquid from being increased in the absorber, it is possible to prevent the absorption liquid from being crystallized and solidified in the absorber. In addition, since the absorption liquid is applied to the surface of the heat exchanger by the application unit, the absorption liquid may be efficiently heated and solidified via the heat exchanger. In addition, since the absorption liquid, which has been applied to and solidified on the surface of the heat exchanger, is peeled off by the peeling unit, it is possible to suppress solidification of the absorption liquid on the surface of the heat exchanger. In addition, when operation starts, since heat (melting heat and dilution heat) may be generated by melting the solidified absorption liquid in the refrigerant, energy may be effectively utilized.

The heat exchanger includes a plate-shaped heat exchanger, and the application unit is configured to form the absorption liquid stored in the storage section into a thin film and apply the absorption liquid to the surface of the plate-shaped heat exchanger.

With this configuration, the thin-film-shaped absorption liquid may be easily formed on the surface of the plate-shaped heat exchanger by the application unit.

The heat exchanger includes a plurality of heat exchangers arranged in multiple stages at a predetermined interval, and the absorption-type heat pump apparatus further includes a rotating shaft provided to penetrate central portions of the plurality of heat exchangers in the multiple stages and to rotate the application unit and the peeling unit along the surfaces of the plate-shaped heat exchangers.

With this configuration, by providing the heat exchangers in multiple stages, the absorption liquid may be more efficiently heated. In addition, by rotating the application unit and the peeling unit by the rotating shaft, the absorption liquid may be easily applied, in a thin film form, to and solidified on the surface of the heat exchangers and the solidified absorption liquid may be easily peeled off from the surface of the heat exchangers.

The device further includes a heat medium supply pipe configured to supply a heat medium to the heat exchangers and a heat medium recovery pipe configured to recover the heat medium from the heat exchangers, the heat medium supply pipe and the heat medium recovery pipe being disposed across the multistage plate-shaped heat exchangers.

With this configuration, the heat medium may be easily supplied to the multistage heat exchangers by the common heat medium supply pipe, and the heat medium may be easily recovered from the multistage heat exchangers by the common heat medium recovery pipe.

The regenerator is configured such that, during heat storage, supply of the absorption liquid from the regenerator to the absorber is stopped, the absorption liquid stored in the storage section is formed into the thin film and then solidified by the application unit, and the solidified absorption liquid is peeled off by the peeling unit, and such that, during heat dissipation, a liquid-phase or vapor-phase refrigerant is supplied to the solidified absorption liquid.

With this configuration, since the concentrated absorption liquid is not supplied to the absorber upon heat storage, it is possible to reliably suppress the absorption liquid from being solidified in the absorber. In addition, energy may be easily stored by solidifying the absorption liquid in the regenerator. Further, during the heat dissipation, energy may be easily extracted by generating melting heat by supplying a liquid-phase or vapor-phase refrigerant to the solidified absorption liquid.

The application unit and the peeling unit are integrally formed with each other.

With this configuration, the configuration may be simplified compared to a case where the application unit and the peeling unit are provided as separate members.

The regenerator is configured to crystallize and solidify the absorption liquid during the heat storage.

With this configuration, the refrigerant may be effectively absorbed by supplying the refrigerant to the crystallized absorption liquid. In addition, since heat may be generated by melting, energy may be easily extracted during the heat dissipation.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating the entire configuration of an absorption-type heat pump apparatus according to an embodiment disclosed herein;
Fig. 2 is a perspective view illustrating a schematic structure of a regenerator of the absorption-type heat pump apparatus according to the embodiment disclosed herein;
Fig. 3 is a view for explaining an operation of the absorption-type heat pump apparatus according to the embodiment disclosed herein during a cooling operation;
Fig. 4 is a view for explaining an operation of the absorption-type heat pump apparatus according to the embodiment disclosed herein during cooling heat storage;
Fig. 5 is a view for explaining an operation of the absorption-type heat pump apparatus according to the embodiment disclosed herein during the use of the cooling heat storage;
Fig. 6 is a view for explaining an operation of the absorption-type heat pump apparatus according to the embodiment disclosed herein during a heating operation;
Fig. 7 is a view for explaining an operation of the absorption-type heat pump apparatus according to the embodiment disclosed herein during heating heat storage; and
Fig. 8 is a view for explaining an operation of the absorption-type heat pump apparatus according to the embodiment disclosed herein during the use of heating heat storage.

### DETAILED DESCRIPTION

Hereinafter, embodiments disclosed herein will be described based on the drawings.

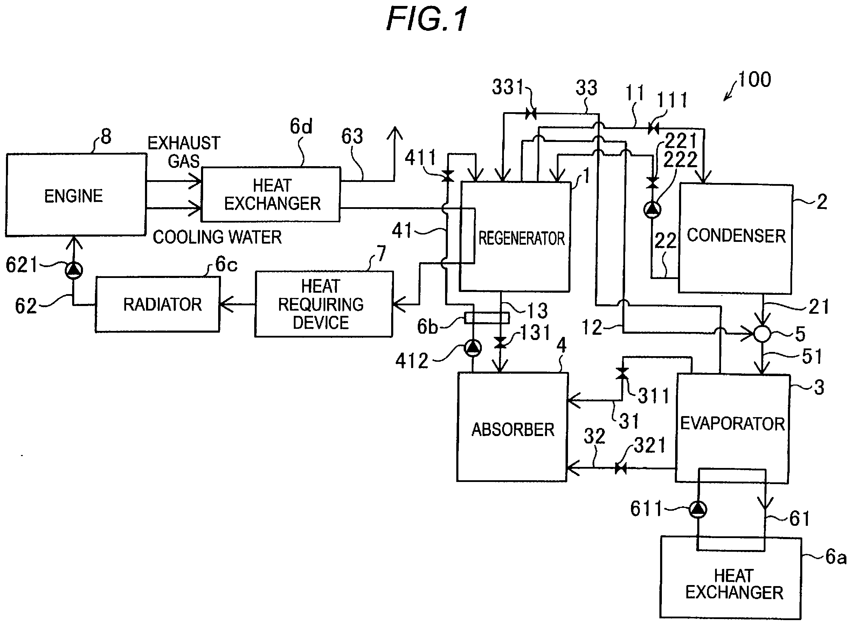

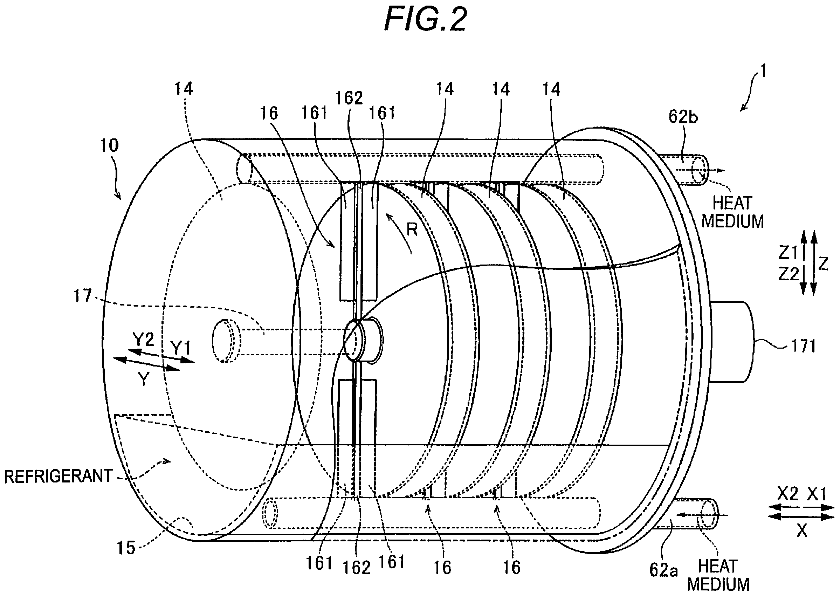

First, referring to Figs. 1 and 2, a configuration of an absorption-type heat pump apparatus 100 according to an embodiment disclosed herein will be described.

### (Configuration of Absorption-type Heat Pump Apparatus)

In the absorption-type heat pump apparatus 100 according to the embodiment disclosed herein, water is used as a refrigerant and an aqueous solution of lithium bromide (LiBr) is used as an absorption liquid. In addition, the absorption-type heat pump apparatus 100 is configured to be mounted in a vehicle (not illustrated) such as a passenger car or a bus including an engine 8. In addition, the absorption-type heat pump apparatus 100 is configured to heat the absorption liquid (diluted liquid) by using (recovering) heat of cooling water, which cools the engine 8, and heat of high-temperature exhaust gas, which is discharged from the engine 8.

As illustrated in Fig. 1, the absorption-type heat pump apparatus 100 includes a regenerator 1, a condenser 2, an evaporator 3, and an absorber 4. The regenerator 1 serves to separate refrigerant vapor (high-temperature water vapor) from the absorption liquid. The condenser 2 serves to condense (liquefy) the refrigerant vapor. The evaporator 3 serves to evaporate (vaporize) the refrigerant that has changed into condensed water under a low-temperature and low-pressure condition during a cooling operation. In addition, the evaporator 3 serves to condense (liquefy) the refrigerant vapor during a heating operation. The absorber 4 serves to absorb the refrigerant vapor (low-temperature water vapor) vaporized in the evaporator 3 into the absorption liquid in a concentrated liquid state.

In addition, the absorption-type heat pump apparatus 100 includes a three-way valve 5, a heat exchanger 6a, and a heat exchanger 6b. In addition, the absorption-type heat pump apparatus 100 is configured to enable heat exchange with the cooling water that circulates through a radiator 6c, a heat exchanger 6d, a heat requiring device 7, and the engine 8.

The regenerator 1 is provided with a pipe 11 configured to send the refrigerant vapor to the condenser 2. The pipe 11 interconnects the regenerator 1 and the condenser 2. In addition, a valve 111 is provided in the middle of the pipe 11. The regenerator 1 is provided with a pipe 12 so as to send the refrigerant vapor to the evaporator 3 via the three-way valve 5. The pipe 12 interconnects the regenerator 1 and the three-way valve 5. The regenerator 1 is provided with a pipe 13 so as to send the concentrated absorption liquid to the absorber 4. The pipe 13 interconnects the regenerator 1 and the absorber 4. In addition, a valve 131 is provided in the middle of the pipe 13.

In addition, as illustrated in Fig. 2, the regenerator 1 includes a container 10, a plurality of plate-shaped heat exchangers 14, a storage section 15, rotators 16, and a rotating shaft 17. Each rotator 16 includes plate-shaped members 161 and arm members 162. A motor 171 is connected to the rotating shaft 17. Meanwhile, the rotator 16 is an example of an "application unit" and a "peeling unit" in the appended claims.

As illustrated in Fig. 1, the condenser 2 is provided with a pipe 21 so as to send the refrigerant to the evaporator 3 via the three-way valve 5. The pipe 21 interconnects the condenser 2 and the three-way valve 5. The condenser 2 is provided with a pipe 22 so as to send the refrigerant to the regenerator 1. The pipe 22 interconnects the condenser 2 and the regenerator 1. In addition, a valve 221 and a pump 222 are provided in the middle of the pipe 22.

The evaporator 3 is provided with a pipe 31 so as to send the refrigerant vapor to the absorber 4. The pipe 31 interconnects the evaporator 3 and the absorber 4. In addition, a valve 311 is provided in the middle of the pipe 31. The evaporator 3 is provided with a pipe 32 so as to send the refrigerant to the absorber 4. The pipe 32 interconnects the evaporator 3 and the absorber 4. In addition, a valve 321 is provided in the middle of the pipe 32. The evaporator 3 is provided with a pipe 33 so as to send the refrigerant vapor to the regenerator 1. The pipe 33 interconnects the evaporator 3 and the regenerator 1. In addition, a valve 331 is provided in the middle of the pipe 33.

The absorber 4 is provided with a pipe 41 so as to send, to the regenerator 1, the absorption liquid which has a reduced concentration by absorbing the refrigerant. The pipe 41 interconnects the absorber 4 and the regenerator 1. In addition, a valve 411 and a pump 412 are provided on a position of the pipe 41.

The three-way valve 5 is provided with a pipe 51 to send the refrigerant. The pipe 51 interconnects the three-way valve 5 and the evaporator 3. The three-way valve 5 is configured to be capable of switching to any one of a state in which the pipes 12 and 21 communicate with each other, a state in which the pipes 12 and 51 communicate with each other, and a state in which the pipes 21 and 51 communicate with each other.

The heat exchanger 6a is configured to perform heat-exchange in order to cool or heat the air inside the vehicle. To the heat exchanger 6a, a pipe 61 is connected in which the heat medium flows. The pipe 61 is configured to exchange heat with the evaporator 3 as well as to exchange heat with the heat exchanger 6a. A pump 611 is provided in the middle of the pipe 61.

The heat exchanger 6b is configured to perform heat exchange between heat of the pipe 13 and heat of the pipe 41.

The radiator 6c is configured to cool the cooling water that cools the engine 8. The cooling water flows through the pipe 62. The pipe 62 is configured to circulate the cooling water through the engine 8, the heat exchanger 6d, the regenerator 1, the heat requiring device 7, and the radiator 6c. A pump 621 is provided in the middle of the pipe 62. The pipe 62 includes a heat medium supply pipe 62a and a heat medium recovery pipe 62b (see Fig. 2).

The heat exchanger 6d is configured to perform heat exchange between heat of the pipe 62 and heat of the pipe 63. The pipe 63 is configured such that the exhaust gas discharged from the engine 8 passes therethrough.

The regenerator 1 is configured to heat the absorption liquid and to separate the refrigerant vapor from the heated absorption liquid. That is, the regenerator 1 is configured to concentrate the absorption liquid diluted by the refrigerant. The regenerator 1 is configured to be heated using the heat of the cooling water, which cools the engine. Specifically, as illustrated in Fig. 2, the heat medium (cooling water) is supplied from the heat medium supply pipe 62a, which supplies the heat medium to the heat exchangers 14. In addition, the heat medium (cooling water) is recovered to the heat medium recovery pipe 62b, which recovers the heat medium from the heat exchangers 14. As a result, the regenerator 1 is heated.

The condenser 2 is configured to condense (liquefy) the refrigerant vapor separated by the regenerator 1. A cooling water circuit (not illustrated) passes through the condenser 2 so as to cool the refrigerant vapor. As a result, the refrigerant vapor is cooled such that the refrigerant is condensed.

The evaporator 3 is configured to take heat from the heat medium of the pipe 61 by evaporating (vaporizing) the refrigerant during the cooling operation. In addition, the evaporator 3 is configured to supply heat to the heat medium of the pipe 61 by condensing (liquefying) the refrigerant during the heating operation. In addition, the evaporator 3 includes a container, which maintains the inside thereof in a vacuum state of the absolute pressure of 1 kPa or less, and a heat exchange unit and an injector, which are provided inside the container. In addition, in the evaporator 3, the refrigerant (water) is sprayed from the injector toward the heat exchange unit. The heat exchange unit is configured to perform heat exchange with the pipe 61. That is, heat exchange between vaporization heat or condensation heat of the refrigerant and the heat medium of the pipe 61 is implemented.

The absorber 4 is configured to absorb the refrigerant vapor evaporated by the evaporator 3 by the absorption liquid. A cooling water circuit (not illustrated) passes through the absorber 4 so as to cool the absorption liquid. As a result, the cooling water is cooled such that the heat generated by absorbing the refrigerant is cooled.

The heat requiring device 7 is a device that is provided in the vehicle and requires heat. The heat requiring device 7 is configured to be supplied with waste heat of the cooling water.

### (Structure of Regenerator)

Here, in the present embodiment, as illustrated in Fig. 2, the regenerator 1 includes the plurality of heat exchangers 14, the storage section 15, the rotators 16, and the rotating shaft 17, which are provided in the container 10. The heat exchangers 14 are formed in a plate shape. Specifically, the heat exchangers 14 are formed in a circular plate shape. A space, through which the heat medium passes, is formed inside the heat exchangers 14. In addition, the heat exchangers 14 are arranged in multiple stages at predetermined intervals. Specifically, the multistage heat exchangers 14 are arranged along the horizontal direction (the X direction).

The heat exchangers 14 are connected to the heat medium supply pipe 62a and the heat medium recovery pipe 62b, which are disposed across the multistage heat exchangers 14. Specifically, the heat medium supply pipe 62a is disposed to extend in the X direction at the lower side (the Z2 direction side) of the multistage heat exchangers 14. The heat medium recovery pipe 62b is disposed to extend in the X direction at the upper side (the Z1 direction side) of the multistage heat exchangers 14.

The storage section 15 is configured to store the absorption liquid therein. Specifically, the storage section 15 is configured to store the absorption liquid, which is in the liquid phase sent from the absorber 4. In addition, the storage section 15 is configured to store the absorption liquid concentrated and solidified by the regenerator 1. In addition, the storage section 15 is configured such that the absorption liquid is supplied thereto from the upper side (the Z1 direction side). In addition, the storage section 15 is configured to send out the absorption liquid from the lower side (the Z2 direction side).

In addition, in the present embodiment, the rotators 16 are configured to apply the absorption liquid stored in the storage section 15 to the surfaces of the heat exchangers 14. In addition, the rotators 16 are configured to peel off the absorption liquid, which has been applied to and solidified on the surfaces of the heat exchangers 14, from the surfaces of the heat exchangers 14. That is, a member configured to apply the absorption liquid and a member configured to peel off the absorption liquid are integrally provided as a rotator 16. In addition, the rotators 16 are configured to form the absorption liquid stored in the storage section 15 into a thin film so as to apply the absorption liquid to the surfaces of the plate-shaped heat exchangers 14 in the form of a thin film.

The rotators 16 are disposed between the multistage heat exchangers 14. That is, each rotator 16 is disposed between each two adjacent heat exchangers 14. The plate-shaped members 161 in each rotator 16 are disposed to extend in the radial direction of the circular heat exchangers 14. The plate-shaped members 161 are configured to apply the absorption liquid to the surfaces of the heat exchangers 14 and to peel off the solidified absorption liquid from the surfaces of the heat exchangers 14 by the rotation of the rotators 16. With respect to one arm member 162, a pair of plate-shaped members 161 is provided on the opposite sides in the X direction (the X1 direction side and the X2 direction side). The arm member 162 of the rotators 16 are connected to the rotating shaft 17 and are configured to rotate in the direction "R" by the rotation of the rotating shaft 17. In addition, a pair of arm members 162 is provided at an interval of about 180 degrees between the adjacent heat exchangers 14.

The rotating shaft 17 is provided so as to penetrate the central portions of the multistage heat exchangers 14. Specifically, the rotating shaft 17 is provided to penetrate substantially the centers of the circular heat exchangers 14. In addition, the rotating shaft 17 is configured to rotate the rotators 16 along the surfaces of the plate-shaped heat exchangers 14. In addition, the rotating shaft 17 is configured to be driven by the motor 171.

In addition, in the present embodiment, the regenerator 1 is configured such that, during heat storage, the supply of the absorption liquid from the regenerator 1 to the absorber 4 is stopped, the absorption liquid stored in the storage section 15 is formed into a thin film and then solidified by the rotators 16, and the solidified absorption liquid is peeled off by the rotators 16. In addition, the regenerator 1 is configured to crystallize and solidify the absorption liquid during the heat storage. That is, the regenerator 1 is configured to crystallize and precipitate the solute of the absorption liquid during the heat storage. The solute of the absorption liquid is precipitated in an amount exceeding the solubility thereof when the solvent (refrigerant) is evaporated (vaporized) and reduced in amount. Meanwhile, the solubility depends on the temperature. That is, even when the temperature varies, the solute of the absorption liquid is precipitated. Here, the solubility of lithium bromide, which is the solute of the absorption liquid, increases as the temperature is increased. That is, when the temperature inside the regenerator 1 is reduced after the operation is stopped, the lithium bromide, which is the solute of the absorption liquid, is precipitated in the regenerator 1. In addition, the regenerator 1 is configured such that the liquid-phase or vapor-phase refrigerant is supplied to the solidified absorption liquid during the heat dissipation.

### (Operation During Cooling Operation)

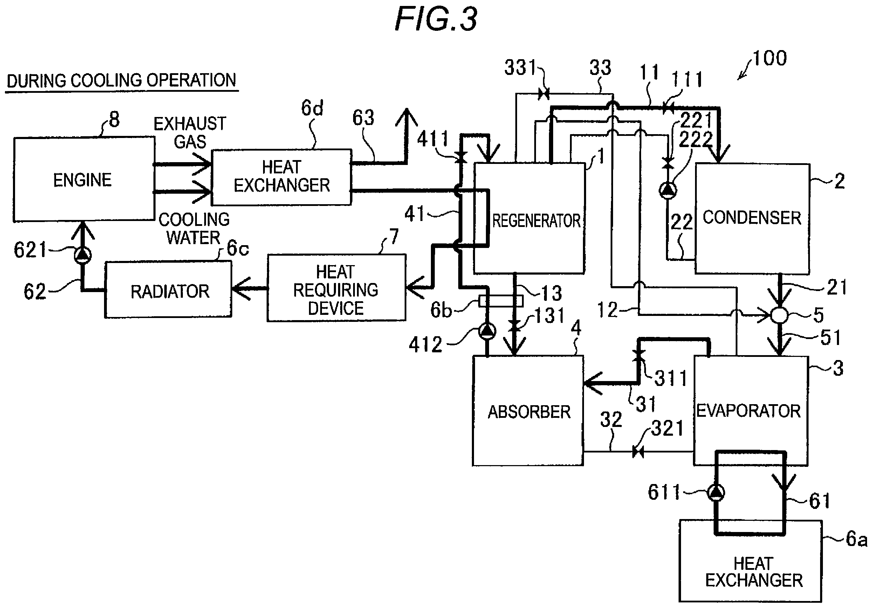

An operation during the cooling operation will be described with reference to Fig. 3. During the cooling operation, as illustrated in Fig. 3, the valves 111, 131, 311 and 411 are opened and the valves 221, 321 and 331 are closed. In addition, the three-way valve 5 is switched so as to cause the condenser 2 (the pipe 21) and the evaporator 3 (the pipe 51) to communicate with each other. In addition, the pumps 412, 611 and 621 are driven. As a result, the refrigerant circulates through the regenerator 1, the condenser 2, the evaporator 3, and the absorber 4. In addition, the absorption liquid circulates through the regenerator 1 and the absorber 4. In addition, the heat medium circulates in the pipe 61. In addition, the cooling water circulates in the pipe 62.

In the regenerator 1, the refrigerant vapor is separated from the diluted absorption liquid sent from the absorber 4, whereby the absorption liquid is concentrated. Then, the refrigerant vapor is sent to the condenser 2. In addition, the concentrated absorption liquid is sent to the absorber 4. In the condenser 2, the refrigerant vapor is condensed (liquefied). The liquefied refrigerant is supplied to the evaporator 3.

In the evaporator 3, the liquid refrigerant is evaporated (vaporized). At this time, the refrigerant takes heat from the heat medium of the pipe 61 by the vaporization heat thereof. Then, the refrigerant vapor is delivered to the absorber 4. In the absorber 4, the refrigerant vapor is absorbed by the absorption liquid. Then, the absorption liquid, which is diluted by absorbing the refrigerant, is sent to the regenerator 1. The heat exchanger 6a cools the interior of the vehicle using the cooled heat medium of the pipe 61.

### (Operation During Cooling Heat Storage)

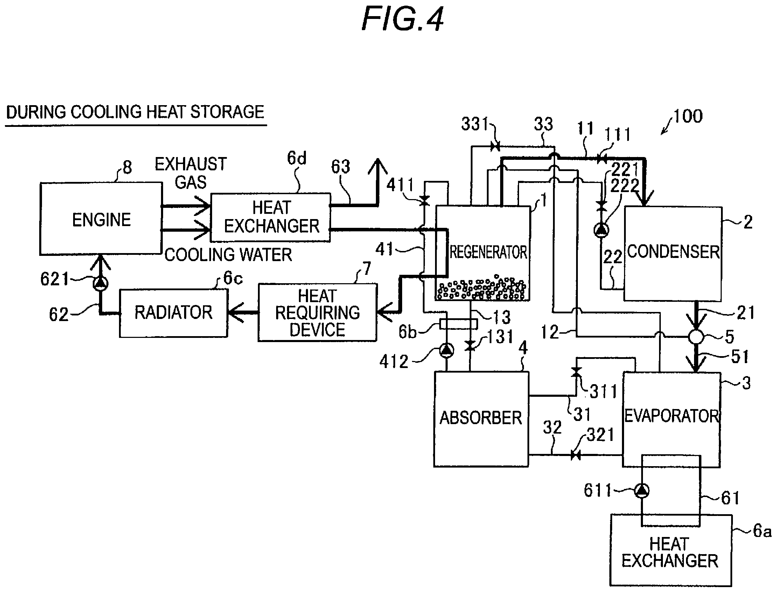

Referring to Fig. 4, an operation during the cooling heat storage will be described with reference to Fig. 4. During the cooling heat storage, as illustrated in Fig. 4, the valve 111 is opened and the valves 131, 221, 311, 321, 331 and 411 are closed. In addition, the three-way valve 5 is switched so as to cause the condenser 2 (the pipe 21) to communicate with the evaporator 3 (the pipe 51). In addition, the pump 621 is driven. As a result, the refrigerant is moved from the regenerator 1 to the evaporator 3 via the condenser 2. In addition, the cooling water circulates in the pipe 62.

In a state where the supply of the absorption liquid from the regenerator 1 to the absorber 4 is stopped, the absorption liquid stored in the storage section 15 in the regenerator 1 is formed into a thin film and applied by the rotators 16. The absorption liquid in the form of the thin film is solidified on the surface of the heat exchanger 6. The solidified absorption liquid is peeled off by the rotators 16. As a result, solid particles of the absorption liquid having a particle size of about 1 mm are formed. As a result, the absorption liquid, which is in a solid-phase, is stored in the regenerator 1. In addition, in the regenerator 1, the refrigerant vapor separated from the absorption liquid is sent to the condenser 2. In the condenser 2, the refrigerant vapor is condensed (liquefied). The liquefied refrigerant is supplied to the evaporator 3. In the evaporator 3, the refrigerant, which is in a liquid-phase, is stored.

### (Operation During Use of Cooling Heat Storage)

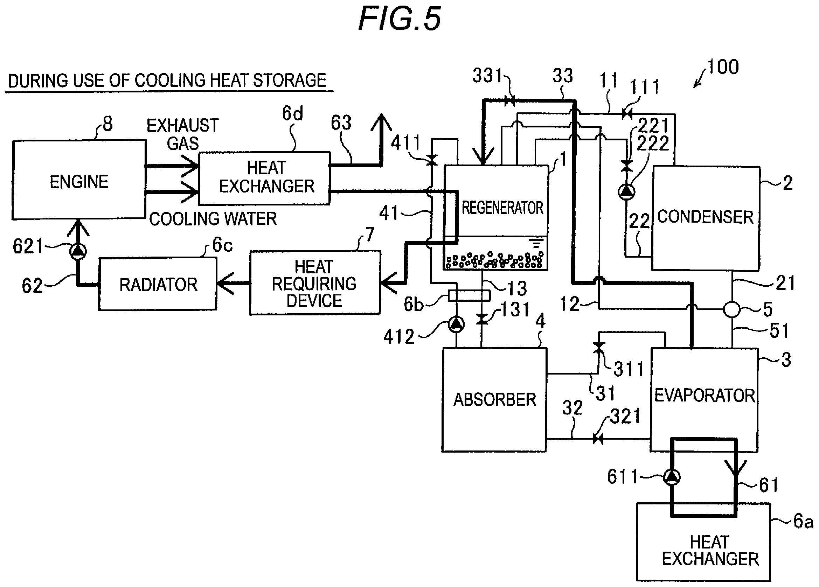

An operation during the use of cooling heat storage will be described with reference to Fig. 5. The use of cooling heat storage is to extract and use energy using the absorption liquid, which is in a solid-phase, stored in the regenerator 1 by cooling heat storage. During the use of cooling heat storage, as illustrated in Fig. 5, the valve 331 is opened and the valves 111, 131, 221, 311, 321 and 411 are closed. In addition, the pumps 611 and 621 are driven. As a result, the refrigerant is moved from the evaporator 3 to the regenerator 1. In addition, the heat medium circulates in the pipe 61. In addition, the cooling water circulates in the pipe 62.

In the regenerator 1, a vapor-phase refrigerant is supplied from the evaporator 3 to the solidified absorption liquid. That is, the refrigerant stored in the evaporator 3 is vaporized and absorbed by the solidified absorption liquid stored in the regenerator 1. Since the solidified absorption liquid more easily absorbs the refrigerant than the absorption liquid, which is in a liquid phase, vaporization of the refrigerant is promoted in the evaporator 3. As a result, the cooling capacity in the evaporator 3 is increased. That is, the interior of the vehicle may be cooled with large cooling capacity during the starting of the cooling operation. In addition, in the regenerator 1, the absorption liquid generates heat by absorbing the refrigerant. At this time, the cooling water in the pipe 62 is heated. That is, during the starting, the temperature of the cooling water may be rapidly increased to an optimum temperature.

### (Operation During Heating Operation)

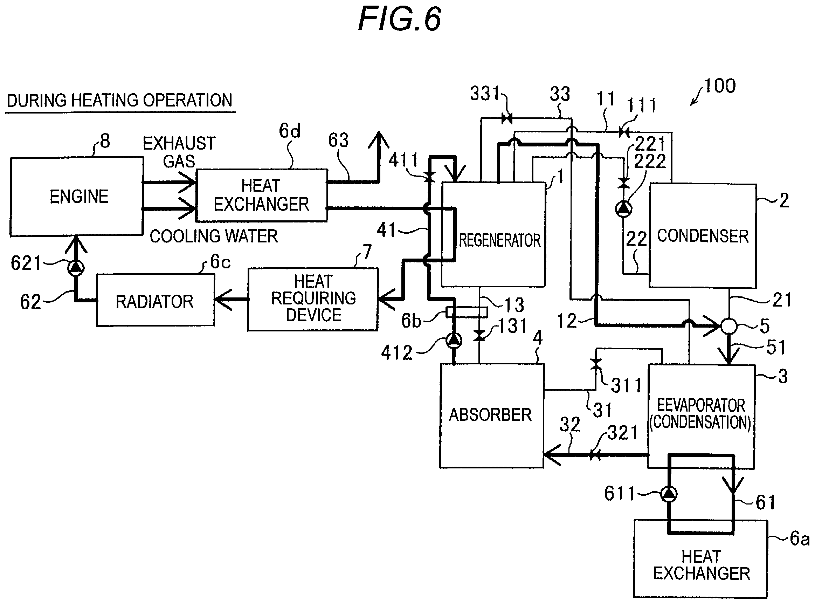

An operation during the heating operation will be described with reference to Fig. 6. During the heating operation, as illustrated in Fig. 6, the valve 321 is opened and the valves 111, 131, 221, 311, 331 and 411 are closed. In addition, the three-way valve 5 is switched so as to cause the regenerator 1 (the pipe 12) to communicate with the evaporator 3 (the pipe 51). In addition, the pumps 412, 611 and 621 are driven. As a result, the refrigerant circulates through the regenerator 1, the evaporator 3, and the absorber 4. In addition, the heat medium circulates in the pipe 61. In addition, the cooling water circulates in the pipe 62.

In the regenerator 1, the absorption liquid is heated and the refrigerant vapor is separated therefrom. Then, the refrigerant vapor is sent to the evaporator 3. In the evaporator 3, the refrigerant vapor is condensed (liquefied). At this time, the refrigerant supplies condensation heat to the heat medium of the pipe 61. Then, the liquefied refrigerant is supplied to the absorber 4.

The refrigerant is sent from the absorber 4 to the regenerator 1. In the heat exchanger 6a, the interior of the vehicle is heated by using the heated heat medium of the pipe 61.

### (Operation During Heating Heat Storage)

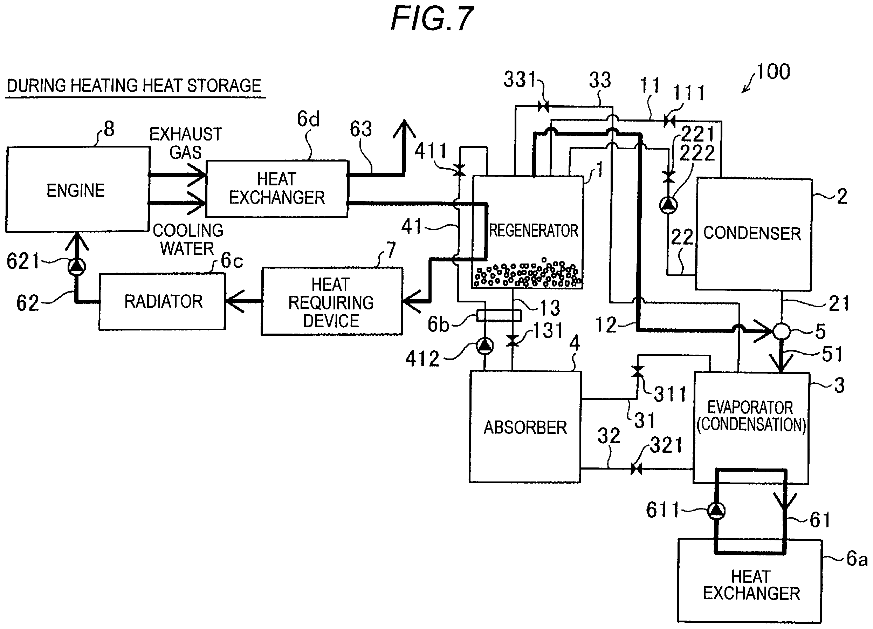

An operation during the heating heat storage will be described with reference to Fig. 7. During the heating heat storage, as illustrated in Fig. 7, the valves 111, 131, 221, 311, 321, 331 and 411 are closed. In addition, the three-way valve 5 is switched so as to cause the regenerator 1 (the pipe 12) to communicate with the evaporator 3 (the pipe 51). In addition, the pumps 611 and 621 are driven. As a result, the refrigerant is moved from the regenerator 1 to the evaporator 3. In addition, the heat medium circulates in the pipe 61. In addition, the cooling water circulates in the pipe 62.

In a state where the supply of the absorption liquid from the regenerator 1 to the absorber 4 is stopped, the absorption liquid stored in the storage section 15 in the regenerator 1 is formed into a thin film and applied by the rotators 16. The absorption liquid in the form of a thin film is solidified on the surface of the heat exchanger 6. The solidified absorption liquid is peeled off by the rotators 16. As a result, solid particles of the absorption liquid having a particle size of about 1 mm are formed. As a result, the solidified absorption liquid is stored in the regenerator 1. In addition, in the regenerator 1, the refrigerant vapor separated from the absorption liquid is sent to the evaporator 3. In the evaporator 3, the refrigerant vapor is condensed (liquefied). At this time, the refrigerant supplies condensation heat to the heat medium of the pipe 61. In addition, in the evaporator 3, the refrigerant, which is in a liquid-phase, is stored.

### (Operation During Use of Heating Heat Storage)

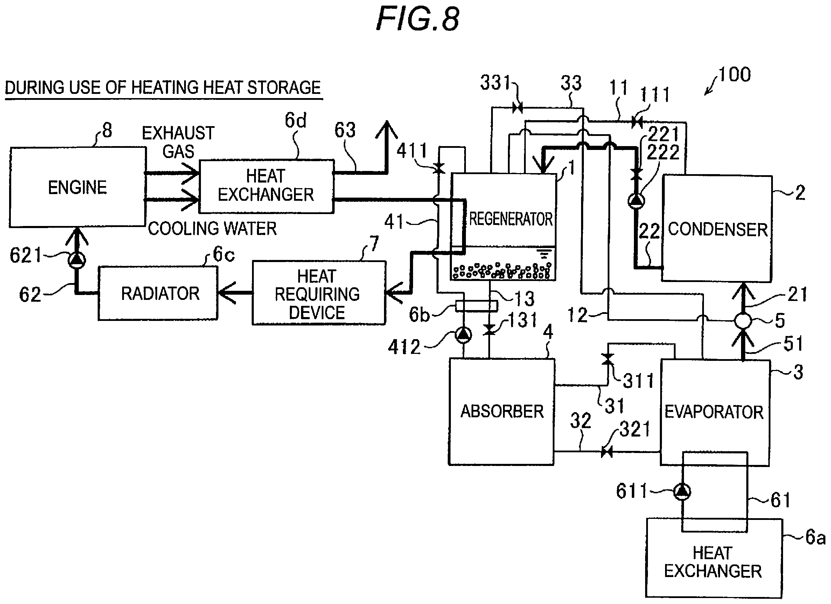

An operation during the use of heating heat storage will be described with reference to Fig. 8. The use of heating heat storage is to extract and use energy using the absorption liquid, which is in a solid phase, stored in the regenerator 1 by heating heat storage. During the use of heating heat storage, as illustrated in Fig. 8, the valve 221 is opened and the valves 111, 131, 311, 321, 331 and 411 are closed. In addition, the three-way valve 5 is switched so as to cause the condenser 2 (the pipe 21) to communicate with the evaporator 3 (the pipe 51). In addition, the pump 621 is driven. As a result, the refrigerant is moved from the evaporator 3 to the regenerator 1 via the condenser 2. In addition, the cooling water circulates in the pipe 62.

In the regenerator 1, the liquid-phase refrigerant is supplied from the evaporator 3 to the solidified absorption liquid. As a result, in the regenerator 1, the absorption liquid generates heat by absorbing the refrigerant. At this time, the cooling water is cooled in the pipe 62. That is, during the starting, the temperature of the cooling water may be rapidly increased to an optimum temperature.

### (Effect of Embodiment)

In the present embodiment, the following effects may be obtained.

In the present embodiment, as described above, the regenerator 1 is provided with the storage section 15 in which the absorption liquid is stored, the heat exchangers 14, and the rotators 16, which apply the absorption liquid stored in the storage section 15 to the surfaces of the heat exchangers 14 and peel off the absorption liquid applied to and solidified on the surface of the heat exchangers 14 from the surface of the heat exchangers 14. As a result, since the absorption liquid may be concentrated and solidified in the regenerator 1 when the operation is stopped, the concentrated absorption liquid is collected in the regenerator 1, so that the concentrated absorption liquid is not supplied to the absorber 4. As a result, since it is possible to suppress the concentration of the absorption liquid from being increased in the absorber 4, it is possible to suppress the absorption liquid from being crystallized and solidified in the absorber 4. In addition, since the absorption liquid is applied to the surfaces of the heat exchangers 14 by the rotators 16, the absorption liquid may be efficiently heated and solidified via the heat exchangers 14. In addition, since the absorption liquid, which has been applied to and solidified on the surfaces of the heat exchangers 14, is peeled off by the rotators 16, it is possible to suppress the absorption liquid from being solidified on the surfaces of the heat exchangers 14. In addition, during the starting of operation, since heat (melting heat and dilution heat) may be generated by melting the solidified absorption liquid in the refrigerant, energy may be effectively utilized.

In addition, in the present embodiment, the rotators 16 are configured to form the absorption liquid stored in the storage section 15 into a thin film and apply the absorption liquid to the surfaces of the plate-shaped heat exchangers 14 in the form of a thin film. As a result, the absorption liquid in the form of a thin film may be easily formed on the surfaces of the plate-shaped heat exchangers 14 by the rotators 16.

In addition, in the present embodiment, the heat exchangers 14 are arranged in multiple stages at a predetermined interval, and the rotating shaft 17 is disposed to penetrate the central portions of the multistage heat exchangers 14 so as to rotate the rotators 16 along the surfaces of the plate-shaped heat exchangers 14. As a result, by providing the heat exchangers 14 in multiple stages, the absorption liquid may be more efficiently heated. In addition, by rotating the rotators 16 by the rotating shaft 17, the absorption liquid may be easily applied, in the form of a thin film, to and solidified on the surface of the heat exchangers 14, and the solidified absorption liquid may be easily peeled off from the surfaces of the heat exchangers 14.

In addition, in the present embodiment, the heat medium supply pipe 62a, which supplies the heat medium to the heat exchanger 14, and the heat medium supply pipe 62b, which recovers the heat medium from the heat exchangers 14, are provided to be disposed across the multistage plate-shaped heat exchangers 14. As a result, the heat medium may be easily supplied to the multistage heat exchangers 14 by the common heat medium supply pipe 62a and the heat medium may be easily recovered from the multistage heat exchangers 14 by the common heat medium recovery pipe 62b.

In addition, in the present embodiment, the regenerator 1 is configured such that, during the heat storage, the supply of the absorption liquid from the regenerator 1 to the absorber 4 is stopped, the absorption liquid stored in the storage section 15 is formed into a thin film and solidified by the rotators 16, and the solidified absorption liquid is peeled off by the rotators 16, and during the heat dissipation, a liquid-phase or vapor-phase refrigerant is supplied to the solidified absorption liquid. As a result, since the concentrated absorption liquid is not supplied to the absorber 4 during the heat storage, the absorption liquid may be reliably suppressed from being solidified in the absorber 4. In addition, energy may be easily stored by solidifying the absorption liquid in the regenerator 1. In addition, during the heat dissipation, the liquid-phase or vapor-phase refrigerant is supplied to the solidified absorption liquid, whereby energy can be easily extracted via generation of melting heat.

In addition, in the present embodiment, a member, which applies the absorption liquid, and a member, which peels off the absorption liquid, are integrally provided. As a result, the configuration may be simplified, compared to a case where the application unit and the peeling unit are provided as separate members.

In addition, in the present embodiment, the regenerator 1 is configured to crystallize and solidify the absorption liquid upon heat storage. As a result, by supplying the refrigerant to the crystallized absorption liquid, the refrigerant may be effectively absorbed. In addition, since heat may be generated by melting, energy may be easily extracted during the heat dissipation.

### (Modification)

The embodiment disclosed here should be considered to be illustrative in all terms and not be limitative. The scope of this disclosure is indicated not by the description of the embodiment, but by the scope of the appended claims, and includes meanings equivalent to the appended claims and all changes (modifications) within the scope.

For example, although the embodiment illustrates an exemplary configuration in which the member, which applies the absorption liquid, and the member, which peels off the absorption liquid, are integrally provided, this disclosure is not limited thereto. In this disclosure, the application unit, which applies the absorption liquid to the surfaces of the heat exchangers, and a peeling unit, which peels off the absorption liquid, which has been applied to and solidified on the surfaces of the heat exchangers, from the surfaces of the heat exchangers may be provided as separate members. For example, the application unit and the peeling unit may be alternately provided at a predetermined angular distance on the same rotator. Thereby, the application unit may be formed of a material suitable for application. For example, the application unit may be configured by a brush. In addition, when the application unit and the peeling unit are separately provided, a pressure suitable for application and a pressure suitable for peeling may be applied respectively to the surfaces of the heat exchangers.

In addition, although the embodiment illustrates an example in which a pair of arm members is provided on the same rotator (the application unit and the peeling unit), this disclosure is not limited thereto. In this disclosure, three or more arm members may be provided on the same rotator. In this case, the arm members may be provided at an equivalent angular interval. For example, when four arm members are provided, the arm members may be arranged at an interval of 90 degrees.

In addition, although the embodiment illustrates an example in which the absorption-type heat pump apparatus disclosed here is applied to an air conditioning system of a vehicle such as a passenger car or a bus, this disclosure is not limited thereto. This disclosure may be applied not only to vehicles, but also to an absorption-type heat pump apparatus for commercial facilities (stationary type).

In addition, although the embodiment illustrates an example in which the absorption liquid is heated using the heat of cooling water and exhaust gas, this disclosure is not limited thereto. For example, the absorption-type heat pump apparatus disclosed herein may be applied to the air conditioning of a hybrid vehicle or an electric vehicle. In addition, the absorption-type heat pump apparatus disclosed herein may be applied to the air conditioning of a passenger car having a fuel cell system by using, as a heating source of the absorption liquid, heat extracted from a battery or a motor of the electric vehicle or heat extracted during the power generation in a fuel cell.

Further, although the embodiment illustrates an example in which water and an aqueous solution of lithium bromide are used as the refrigerant and the absorption liquid, this disclosure is not limited thereto. For example, the absorption-type heat pump apparatus may be configured using ammonia and water as the refrigerant and the absorption liquid, respectively. In addition, other absorption liquids and refrigerants may be used.

## Claims

1. An absorption-type heat pump apparatus (100) comprising:
an evaporator (3) that is configured to evaporate a refrigerant;
an absorber (4) that is configured to absorb, by an absorption liquid, the refrigerant evaporated by the evaporator (3);
a regenerator (1) that is configured to concentrate the absorption liquid diluted by the refrigerant; and
a pipe (33) interconnecting the evaporator (3) and the regenerator (1), the pipe (33) being provided with a valve (331),
the absorption-type heat pump apparatus (100) being **characterized in that** the regenerator (1) includes a storage section (15) that is configured to store the absorption liquid therein, a heat exchanger (14), an application unit (16) that is configured to apply, to a surface of the heat exchanger (14), the absorption liquid stored in the storage section (15), and a peeling unit (16) that is configured to peel off, from the surface of the heat exchanger (14), the absorption liquid applied to and solidified on the surface of the heat exchanger (14).

2. The absorption-type heat pump apparatus (100) according to claim 1,
wherein the heat exchanger (14) includes a plate-shaped heat exchanger, and
the application unit (16) is configured to form the absorption liquid stored in the storage section (15) into a thin film and apply the absorption liquid to the surface of the plate-shaped heat exchanger (14).

3. The absorption-type heat pump apparatus (100) according to claim 2,
wherein the heat exchanger (14) includes a plurality of heat exchangers arranged in multiple stages at a predetermined interval, and
the absorption-type heat pump apparatus (100) further includes a rotating shaft (17) provided to penetrate central portions of the plurality of heat exchangers (14) in the multiple stages and to rotate the application unit (16) and the peeling unit (16) along the surfaces of the plate-shaped heat exchangers (14).

4. The absorption-type heat pump apparatus (100) according to claim 3, further comprising:
a heat medium supply pipe (62a) configured to supply a heat medium to the heat exchangers (14) and a heat medium recovery pipe (62b) configured to recover the heat medium from the heat exchangers (14), the heat medium supply pipe (62a) and the heat medium recovery pipe (62b) being disposed across the multistage plate-shaped heat exchangers (14).

5. The absorption-type heat pump apparatus (100) according to any one of claims 2 to 4,
Wherein, during heat storage, in a state where the supply of the absorption liquid from the regenerator (1) to the absorber (4) is stopped, the regenerator (1) is configured to:
form the absorption liquid stored in the storage section (15) into the thin film, solidify the absorption liquid by the application unit (16), and peel off the solidified absorption liquid by the peeling unit (16),
and to, during heat dissipation, supply a liquid-phase or vapor-phase refrigerant to the solidified absorption liquid.

6. The absorption-type heat pump apparatus (100) according to any one of claims 1 to 5,
wherein the application unit (16) and the peeling unit (16) are integrally formed with each other.

7. The absorption-type heat pump apparatus (100) according to any one of claims 1 to 6,
wherein the regenerator (1) is configured to crystallize and solidify the absorption liquid during the heat storage by applying the absorption liquid to the surfaces of the heat exchanger (14).

## Patentansprüche

1. Absorptionswärmepumpenvorrichtung (100), umfassend:
einen Verdampfer (3), der dazu ausgestaltet ist, ein Kühlmittel zu verdampfen,
einen Absorber (4), der dazu ausgestaltet ist, durch eine Absorptionsflüssigkeit das von dem Verdampfer (3) verdampfte Kühlmittel zu absorbieren,
einen Regenerator (1), der dazu ausgestaltet ist, die durch das Kühlmittel verdünnte Absorptionsflüssigkeit zu konzentrieren, und
ein Rohr (33), das den Verdampfer (3) und den Regenerator (1) miteinander verbindet, wobei das Rohr (33) mit einem Ventil (331) versehen ist,
wobei die Absorptionswärmepumpenvorrichtung (100) **dadurch gekennzeichnet ist, dass** der Regenerator (1) einen Aufbewahrungsabschnitt (15), der dazu ausgestaltet ist, die Absorptionsflüssigkeit darin aufzubewahren, einen Wärmetauscher (14), eine Aufbringungseinheit (16), die dazu ausgestaltet ist, auf eine Fläche des Wärmetauschers (14) die in dem Aufbewahrungsabschnitt (15) aufbewahrte Absorptionsflüssigkeit aufzubringen, und eine Ablöseeinheit (16) einschließt, die dazu ausgestaltet ist, von der Fläche des Wärmetauschers (14) die auf die Fläche des Wärmetauschers (14) aufgebrachte und daran verfestigte Absorptionsflüssigkeit abzulösen.

2. Absorptionswärmepumpenvorrichtung (100) nach Anspruch 1,
wobei der Wärmetauscher (14) einen plattenförmigen Wärmetauscher einschließt und
die Aufbringungseinheit (16) dazu ausgestaltet ist, die in dem Aufbewahrungsabschnitt (15) aufbewahrte Absorptionsflüssigkeit zu einem dünnen Film auszubilden und die Absorptionsflüssigkeit auf die Fläche des plattenförmigen Wärmetauschers (14) aufzubringen.

3. Absorptionswärmepumpenvorrichtung (100) nach Anspruch 2,
wobei der Wärmetauscher (14) eine Vielzahl von Wärmetauschern einschließt, die in mehreren Stufen in einem vorgegebenen Abstand angeordnet sind, und
die Absorptionswärmepumpenvorrichtung (100) ferner eine Drehwelle (17) einschließt, die bereitgestellt ist, um in zentrale Teile der Vielzahl von Wärmetauschern (14) in den mehreren Stufen einzudringen und um die Aufbringungseinheit (16) und die Ablöseeinheit (16) entlang der Flächen der plattenförmigen Wärmetauscher (14) zu drehen.

4. Absorptionswärmepumpenvorrichtung (100) nach Anspruch 3, ferner umfassend:
ein Wärmemediumzuführungsrohr (62a), das dazu ausgestaltet ist, den Wärmetauschern (14) ein Wärmemedium zuzuführen und ein Wärmemediumrückgewinnungsrohr (62b), das dazu ausgestaltet ist, das Wärmemedium von den Wärmetauschern (14) zurückzugewinnen, wobei das Wärmemediumzuführungsrohr (62a) und das Wärmemediumrückgewinnungsrohr (62b) quer durch die mehrstufigen plattenförmigen Wärmetauscher (14) angeordnet sind.

5. Absorptionswärmepumpenvorrichtung (100) nach einem der Ansprüche 2 bis 4,
wobei der Regenerator (1) während der Wärmespeicherung in einem Stadium, in dem die Zufuhr der Absorptionsflüssigkeit von dem Regenerator (1) zu dem Absorber (4) gestoppt ist, dazu ausgestaltet ist, um:
die in dem Aufbewahrungsabschnitt (15) aufbewahrte Absorptionsflüssigkeit zu dem dünnen Film auszubilden, die Absorptionsflüssigkeit durch die Aufbringungseinheit (16) zu verfestigen und die verfestigte Absorptionsflüssigkeit durch die Ablöseeinheit (16) abzulösen
und um während der Wärmeabfuhr der verfestigten Absorptionsflüssigkeit ein Kühlmittel in der flüssigen Phase oder in der Dampfphase zuzuführen.

6. Absorptionswärmepumpenvorrichtung (100) nach einem der Ansprüche 1 bis 5,
wobei die Aufbringungseinheit (16) und die Ablöseeinheit (16) einstückig miteinander ausgebildet sind.

7. Absorptionswärmepumpenvorrichtung (100) nach einem der Ansprüche 1 bis 6,
wobei der Regenerator (1) dazu ausgestaltet ist, die Absorptionsflüssigkeit während der Wärmespeicherung zu kristallisieren und zu verfestigen, indem die Absorptionsflüssigkeit auf die Flächen des Wärmetauschers (14) aufgebracht wird.

## Revendications

1. Appareil de pompe à chaleur de type à absorption (100) comprenant :
un évaporateur (3) qui est configuré pour évaporer un réfrigérant ;
un absorbeur (4) qui est configuré pour absorber, par un liquide d'absorption, le réfrigérant évaporé par l'évaporateur (3),
un régénérateur (1) qui est configuré pour concentrer le liquide d'absorption dilué par le réfrigérant ; et
un tuyau (33) interconnectant l'évaporateur (3) et le régénérateur (1), le tuyau (33) étant prévu avec une valve (331),
l'appareil de pompe à chaleur de type à absorption (100) étant **caractérisé en ce que** le régénérateur (1) comprend une section de stockage (15) qui est configurée pour stocker le liquide d'absorption à l'intérieur de cette dernière, un échangeur de chaleur (14), une unité d'application (16) qui est configurée pour appliquer, sur une surface de l'échangeur de chaleur (14), le liquide d'absorption stocké dans la section de stockage (15), et une unité de détachement (16) qui est configurée pour détacher, de la surface de l'échangeur de chaleur (14), le liquide d'absorption appliqué sur sur la surface de l'échangeur de chaleur (14) et solidifié sur cette dernière.

2. Appareil de pompe à chaleur de type à absorption (100) selon la revendication 1,
dans lequel l'échangeur de chaleur (14) comprend un échangeur de chaleur en forme de plaque, et
l'unité d'application (16) est configurée pour former le liquide d'absorption stocké dans la section de stockage (15) sous forme d'un film fin et appliquer le liquide d'absorption sur la surface de l'échangeur de chaleur en forme de plaque (14).

3. Appareil de pompe à chaleur de type à absorption (100) selon la revendication 2,
dans lequel l'échangeur de chaleur (14) comprend une pluralité d'échangeurs de chaleur agencés sur plusieurs étages à un intervalle prédéterminé, et
l'appareil de pompe à chaleur de type à absorption (100) comprend en outre un arbre rotatif (17) prévu pour pénétrer dans des parties centrales de la pluralité d'échangeurs de chaleur (14) dans la pluralité d'étages et pour faire tourner l'unité d'application (16) et l'unité de détachement (16) le long des surfaces des échangeurs de chaleur en forme de plaque (14).

4. Appareil de pompe à chaleur de type à absorption (100) selon la revendication 3, comprenant en outre :
un tuyau d'alimentation de fluide caloporteur (62a) configuré pour fournir un fluide caloporteur aux échangeurs de chaleur (14) et un tuyau de récupération de fluide caloporteur (62b) configuré pour récupérer le fluide caloporteur des échangeurs de chaleur (14), le tuyau d'alimentation en fluide caloporteur (62a) et le tuyau de récupération de fluide caloporteur (62b) étant disposés entravers des échangeurs de chaleur en forme de plaque (14) à plusieurs étages.

5. Appareil de pompe à chaleur de type à absorption (100) selon l'une quelconque des revendications 2 à 4,
dans lequel, pendant le stockage de chaleur, dans un état dans lequel l'alimentation du liquide d'absorption du générateur (1) à l'absorbeur (4) est arrêtée, le régénérateur (1) est configuré pour :
former le liquide d'absorption stocké dans la section de stockage (15) sous la forme du film fin, solidifier le liquide d'absorption par l'unité d'application (16) et détacher le liquide d'absorption solidifié par l'unité de détachement (16),
et pour, pendant la dissipation de chaleur, fournir un réfrigérant en phase liquide ou phase vapeur au liquide d'absorption solidifié.

6. Appareil de pompe à chaleur de type à absorption (100) selon l'une quelconque des revendications 1 à 5,
dans lequel l'unité d'application (16) et l'unité de détachement (16) sont formées d'un seul tenant entre elles.

7. Appareil de pompe à chaleur de type à absorption (100) selon l'une quelconque des revendications 1 à 6,
dans lequel le régénérateur (1) est configuré pour cristalliser et solidifier le liquide d'absorption pendant le stockage de chaleur en appliquant le liquide d'absorption sur les surfaces de l'échangeur de chaleur (14).
